# EUROPÄISCHE PATENTSCHRIFT

(11) **EP 1 072 660 B1**
(45) Veröffentlichungstag und Bekanntmachung des Hinweises auf die Patenterteilung: **15.10.2003**
(21) Anmeldenummer: 00114718.0
(22) Anmeldetag: 08.07.2000
(51) Int. Cl.: C09D 183/04, C09D 183/10, C08G 77/445

(54) **Polyorganosiloxanharze mit Trenneffekt**
Polyorganosiloxane release resins
Résines de polyorganosiloxane anti-adhésives

(30) Priorität: 21.07.1999 DE 19934103
(43) Veröffentlichungstag der Anmeldung: 31.01.2001
(73) Patentinhaber: Goldschmidt AG, 45127 Essen (DE)
(72) Erfinder: Reusmann, Gerhard Dr., 45131 Essen (DE)

(56) Entgegenhaltungen:
- EP-A- 0 017 958
- EP-A- 0 092 701
- EP-A- 0 638 605
- DE-C- 3 728 414
- US-A- 4 713 410
- DATABASE WPI Derwent Publications Ltd., London, GB; AN 1993-013486 XP002194898 & JP 04 341371 A (KANSAI), 27. November 1992 (1992-11-27)

## Beschreibung

Die vorliegende Erfindung betrifft Zusammensetzungen zur Herstellung von Beschichtungen mit Trenneffekt, damit beschichtete Substrate sowie ein Verfahren zur Herstellung der Zusammensetzungen.

Siliconharz- und Siliconöl- basierende Beschichtungen und deren Benutzung als Trennbeschichtung sind seit langer Zeit bekannt. So beschreibt das US-Patent 2 606 510 die Verwendung von Siliconharzen, das US-Patent 2 462 242 die Benutzung von Siliconölen.

Die Verwendung von hydroxyfunktionellen Polymethylphenylsiliconharzen für Trennbeschichtungen bei Backformen wird in US-Patent 2 672 104 beschrieben.

Die Kombination von Siliconharzen und Siliconölen für Trennbeschichtungen wird seit mehreren Jahren in der Praxis verwendet. Derartige Kombinationen sind besonders wegen der Trennwirkung bei einem weiten Bereich an Nahrungsmitteln und wegen der guten Beständigkeit geeignet. Ein Beispiel ist die in US-Patent 3 002 946 beschriebene Kombination aus 80-98 Gew.-% Bindemittel, 1-10 Gew.-% hydroxyendfunktionellem Polymethylphenylsiloxan-Öl und 1-19 Gew.-% Methylgruppen endverschlossenden Polydiorganosiloxan-Öl.

Weitere Patente befassen sich mit der Verbesserung der Formulierung, wie in US-Patent 3 002 946 beschrieben. Diese Verbesserungen sind teils, wie in US-Patent 3 925 276 beschrieben, Verbesserungen des Siliconharzes, oder, wie in US-Patent 4 302 512, die Verbesserung des Siliconöles. Das europäische Patent EP 0 239 049 beschreibt die Optimierung der Katalysatoren bei der Herstellung der Trennbeschichtung.

Die Verwendung von Siliconpolyester wird in Kombination mit laminaren Festkörpern im UK-Patent GB 2 152 946 A und in Kombination mit linearen Siloxanen im deutschen Patent DE 37 284 14 A beschrieben.

Die Aufgabe der vorliegenden Erfindung besteht in der Bereitstellung eines Polysiloxanharzes mit Trenneffekt und der daraus hergestellten Trennbeschichtung mit verbesserten Eigenschaften bezüglich des Trenneffektes. Die Trennbeschichtung muß ungiftig und einfach auf beschichtete oder unbeschichtete Substrate zu applizieren sein.

Die vorgenannte Aufgabe wird gelöst durch eine Zusammensetzung zur Herstellung von Beschichtungen mit Trennneffekt enthaltend
(A) 100 Gew.-Teile eines oder mehrerer Polysiloxanharze der allgemeinen Formel

   RₐSi(OR')_{b}O_{(4-a-b)/2}

   mit 0<a<2, 0<b<2 und a+b<4,
(B) 0,05 bis 10 Gew.-Teile eines oder mehrerer linearer und/oder verzweigter Polysiloxane der Formel

   R''O-[R'''₂Si-O]ₙ-R''
(C) 5 bis 80 Gew.-Teile eines Hydroxylgruppen enthaltenden Polyesters,
wobei
Rₐ, R', R'' und R''' jeweils unabhängig voneinander für einen Alkylrest mit 1 bis 8 C-Atomen oder einen aromatischen Rest mit 6 bis 20 C-Atomen steht und
n für eine Zahl im Bereich von 4 bis 5000 steht.

Bei erhöhter Temperatur, gegebenenfalls in Gegenwart eines oder mehrerer Lösemittel und zweckmäßig unter Verwendung von Katalysatoren, kann eine Zusammensetzung erhalten werden, die nach Trocknung eine verbesserte Trennbeschichtung ergibt.

Komponente (A) (RₐSi(OR')_{b}O_{(4 - a - b)/2}) ist ein Polysiloxanharz mit 0<a<2, 0<b<2 und a+b<4, wobei R eine Alkylgruppe bestehend aus 1 bis 8 Kohlenstoffatomen oder eine aromatische Gruppierung mit 6 bis 20 Kohlenstoffatomen ist. Beispiele für Alkylgruppen sind Methyl, Ethyl, Isopropyl, n-Butyl und t-Butyl. Ein Beispiel für eine aromatische Gruppierung ist Phenyl. Bevorzugte Substituenten R sind Methyl oder Phenyl oder Mischungen aus Methyl und Phenyl. R' ist eine Alkylgrupppe bestehend aus 1 bis 8 Kohlenstoffatomen wie zum Beispiel Methyl oder Ethyl.

Die Herstellung von Siliconharzen der Komponente (A) ist seit langem in der Literatur bekannt (siehe W. Noll in "Chemie und Technologie der Silicone", Verlag Chemie, Weinheim (1968)) und wird beispielsweise im deutschen Patent DE 34 12 648 C beschrieben.

Das Polysiloxan (Komponente (B)) der Formel R''O-[R'''₂Si-O]ₙ-R " wird üblicherweise auch als Trennöl bezeichnet. R" steht beispielsweise für einen Wasserstoffrest oder eine Alkylgruppe, mit 1 bis 8 Kohlenstoffatomen bedeutet. R" kann auch für eine - Si(CH₃)₃-Gruppe stehen.

R''' kann innerhalb des Moleküls der Komponente (B) gleich oder verschieden sein und für eine Phenylgruppe oder eine Alkylgruppe bestehend aus 1 bis 8 Kohlenstoffatomen stehen. Bevorzugt steht R''' für Methyl oder Phenyl oder Mischungen aus Methyl und Phenyl. Ein geringer Anteil von R''' kann auch für eine Polysiloxanseitenkette -[R'''₂Si-O]ₙ-R'' stehen, so daß neben linearen Strukturen auch leicht verzweigte Strukturen des Trennöls möglich sind. n ist im Durchschnitt 4 bis 5000.

Ebenfalls geeignet als Komponente (B) sind reine Polydimethylsiloxane und Polydimethylsiloxane, bei denen bis zu 20 Mol-% der Methylreste durch Phenylreste ersetzt sind. Derartige Siloxane weisen keine reaktiven Gruppen auf (R'' = -Si(CH₃)₃).

Der hydroxygruppenhaltige Polyester, der beispielsweise in der DE 37 28 414 C1 beschrieben ist, auf die voll umfänglich Bezug genommen wird, wird zum Beispiel durch Veresterungsreaktion aus Polycarbonsäuren und Polyalkoholen oder durch Umesterungsreaktion von Polycarbonsäureestern mit Polyalkoholen mit einem Stoffmengenverhältnis COOR : C-OH, bzw. COOH zu C-OH > 1,0 hergestellt.

Die Mengenanteile der Komponenten (A), (B) und (C) können in breiten Bereichen variiert werden.

Besonders bevorzugt im Sinne der vorliegenden Erfindung sind Zusammensetzungen, die 0,5 bis 5 Gew.-Teile Polysiloxan (B), bezogen auf 100 Gew.-Teile der Komponente (A) enthalten.

Darüber hinaus sind besonders bevorzugt Zusammensetzungen, die 10 bis 30 Gew.-Teile Polyester (C), bezogen auf 100 Gew.-Teile der Komponente (A) enthalten.

Die Beschichtungszusammensetzungen sind vorzugsweise dadurch erhältlich, daß man die Komponenten (A), (B) und (C) gleichzeitig miteinander umsetzt. Diese Komponenten werden vorzugsweise nur bis zu einem Umsetzungsgrad von 20 bis 80 %, insbesondere 25 bis 80 % umgesetzt. Ein ausreichender Umsetzungsgrad läßt sich beispielsweise dadurch ermitteln, daß man aus der Reaktionsmischung einen Teil entnimmt, diesen auf einer Glasplatte trocknet und die Transparenz der Beschichtung der Glasplatte bestimmt. Ein transparenter Film zeigt einen ausreichenden Reaktionsumsatz an. Aus der abdestillierten Ethanolmenge kann man darüber hinaus den Reaktionsumsatz genau bestimmen.

Besonders bevorzugte Substrate, die mit Hilfe der vorliegenden Erfindung beschichtet werden können, sind beispielsweise Backbleche, Backformen, Pfannen, Metalltöpfe und dergleichen.

Durch Einbrennen der Zusammensetzung bei Temperaturen und unter Bedingungen, wie sie beispielsweise in der DE 37 28 414 C1 beschrieben sind, ist es möglich, einen vollständigen Reaktionsumsatz zu erhalten.

Die Modifizierung des Siliconharzes mit einem Polyester durch Umesterungsreaktion erhöht die Kochwasserbeständigkeit und verringert die Thermoplastizität der gehärteten Beschichtung. Ebenfalls werden Pigmentierbarkeit und der Glanz der Beschichtung verbessert.

Zweckmäßig wird die Reaktion bei gegenüber Raumtemperatur erhöhter Temperatur unter Verwendung eines Katalysators durchgeführt. Geeignete Katalysatoren, wie sie in der EP 0 092 701 A beschrieben sind, sind zum Beispiel Metallkatalysatoren auf Basis von zum Beispiel Magnesium, Kobalt, Eisen, Aluminium, Titan, Blei, Zink oder Zinn, beispielsweise in Form ihrer Laurate, Oktoate, Acetate, Acetylacetonate, Neodecanate oder Naphthalate. Besonders geeignete Organozinnkatalysatoren sind beispielsweise Dibutylzinndilaurat, Dibutylzinndioktoat oder Dibutylzinndiacetat. Besonders geeignete Organotitankatalystatoren sind beispielsweise Tetra(n-butyl)titanat oder Tetra(isopropyl)titanat.

Überraschenderweise wurde gefunden, daß durch chemische Anbindung von Polysiloxanharz (A) und Polysiloxan (B) durch Reaktion mit einem hydroxyfunktionellen Polyester (C) im Vergleich zu handelsüblichen Abmischungen von Silicon- oder Siliconpolyesterharz mit einem Polysiloxan (Trennöl) (B) eine deutliche Verbesserung der Beständigkeit der Beschichtung erreicht werden kann. Derartige Siliconpolyesterharze werden üblicherweise durch Umsetzung von Siliconharz (A) und Polyester (C) hergestellt. Ebenfalls wurde durch die chemische Anbindung die Verträglichkeit von Siliconharz (A) und Polysiloxan (B) entscheidend erhöht. Die Separationsneigung des Polysiloxans (B) wird dadurch deutlich erniedrigt.

Die Zusammensetzungen lassen sich durch Rakeln, Tauchen oder Spritzapplikation auf das zu beschichtende Substrat auftragen und ergeben nach dem Einbrennprozeß eine Beschichtung mit hervorragendem Trenneffekt.

Gegebenenfalls können durch Formulierung mit Pigmenten auch farbige Beschichtungszusammensetzungen erhalten werden. Zusatzstoffe aus der Gruppe der Lösemittel, Füllstoffe, Pigmente, Haftvermittler, Rheologiesteurungsmittel, Stabilisatoren oder Additive ermöglichen eine Anpassung der Formulierung an die jeweilige Applikationsart. Durch die Einarbeitung von PTFE (Polytetrafluorethylen)-Pulver kann zum Beispiel die Trennwirkung weiter verbessert werden.

Die Erfindung wird anhand der folgenden Beispiele erläutert.

### Ausführungsbeispiele:

### Bezugs-Beispiel 1 (Herstellung des Siliconharzes (A))

Das Alkoxypolysiloxan der Formel (C₆H₅)_{0,45}(CH₃)_{0,65}-Si(OC₂H₅)_{0,28}O_{1,31} (A) ist in DE 37 28 414 C beschrieben und wurde gemäß der DE 34 12 648 A aus Phenyltrichlorsilan, Methylethoxypolysiloxan, Ethanol und Wasser hergestellt. Das Siliconharz hatte eine Ethoxygehalt von 11,9 Gew.-%.

### Beispiel 1 (erfindungsgemäße Zusammensetzung)

263 g eines Hydroxygruppen enthaltenden Polyesters (C) mit einer OH-Zahl von 560 mg KOH/g (hergestellt aus Trimethylolpropan und Dimethylterephthalat unter Katalyse nach Beispiel 1.1 aus DE 37 28 414 A) wurde mit 1000 g des Siliconharzes (A) aus Bezugs-Beispiel 1 und 2,5 g eines Polydimethylsiloxans (B) der Formel C₂H₅O-[Si(CH₃)₂O]₃₀-C₂H₅ in 781 g Xylol, 381 g Diethylenglycoldimethylether und 0,3 g Tetra (n-butyl)titanat bei 135°C bis zu einem Reaktionsumsatz umgesetzt, bei dem die auf einer Glasplatte getrocknete Zusammensetzung eine klare, transparente Beschichtung ergab. Die abdestillierte Ethanolmenge von 74 g entsprach einem Reaktionsumsatz von 60 %.

### Beispiel 2 (erfindungsgemäße Zusammensetzung)

263 g eines Hydroxygruppen enthaltenden Polyesters (C) mit einer OH-Zahl von 560 mg KOH/g (hergestellt aus Trimethylolpropan und Dimethylterephthalat unter Katalyse nach Beispiel 1.1 aus DE 37 28 414 A) wurde mit 1000 g des Siliconharzes (A) aus Bezugs-Beispiel 1 und 2,5 g eines Polydimethylsiloxans (B) der Formel 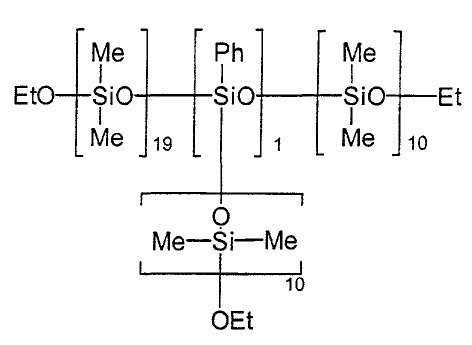 in 781 g Xylol, 381 g Diethylenglycoldimethylether und 0,3 g Tetra(n-butyl)titanat bei 135°C bis zu einem Reaktionsumsatz umgesetzt, bei dem die auf einer Glasplatte getrocknete Zusammensetzung eine klare, transparente Beschichtung ergab. Die abdestillierte Ethanolmenge von 74 g entsprach einem Reaktionsumsatz von 60%.

### Vergleichs-Beispiel 1 (nicht-erfindungsgemäße Zusammensetzung)

263 g eines Hydroxygruppen enthaltenden Polyesters (C) mit einer OH-Zahl von 560 mg KOH/g (hergestellt aus Trimethylolpropan und Dimethylterephthalat unter Katalyse nach DE 37 28 414 A) wurde mit 1000 g des Siliconharzes (A) aus Bezugs-Beispiel 1 wurde mit 781 g Xylol, 381 g Diethylenglycoldimethylether und 0,3 g Tetra(n-butyl)titanat bei 135°C bis zu einem Reaktionsumsatz umgesetzt, bei dem die auf einer Glasplatte getrocknete Zusammensetzung eine klare, transparente Beschichtung ergab. Die abdestillierte Ethanolmenge von 73 g entsprach einem Reaktionsumsatz von 60 %. Zu dem Siliconpolyesterharz wurden anschließend 2,2 g eines Polydimethylsiloxans (B) der Formel C₂H₅O- [Si (CH₃)₂O]₃₀-C₂H₅ zugegeben und mit 5 g Tetra(n-butyl)titanat versetzt. Die Formulierung entsprach Zubereitung Z--1 aus DE 37 28 414 C.

### Vergleichs-Beispiel 2

Eine Mischung aus Methyl-Phenyl-Siliconharz und Polydiorganosiloxan nach Beispiel 1 aus EP 0 239 049 C.

### Beispiel 2 (Herstellung der Beschichtungen)

Die Zusammensetzungen wurden durch Vermischen der Komponenten entsprechend Tabelle 1 hergestellt.

**Tabelle 1:**

| Formulierung der Zusammensetzungen (in Gewichtsanteilen) | | | | |
|---|---|---|---|---|
| | Beschichtung 1 | Beschichtung 2 | Beschichtung 3 | Beschichtung 4 |
| Zusammensetzung nach Beispiel 1 | 500 g | | | |
| Zusammensetzung nach Beispiel 2 | | 500 g | | |
| Zusammensetzung nach Vgl.-Beispiel 1 | | | 500 g | |
| Zusammensetzung nach Vgl.-Beispiel 2 | | | | 500 g |
| Xylol | | | | 100 g |

Die Beschichtungen wurden durch Rakeln mit einer Trockenfilmstärke von ca. 20 bis 25 µm aufgetragen und 15 Minuten bei 280°C eingebrannt. Es ergaben sich jeweils homogene Filme.

### Testmethoden:

### Trenneffekt:

Der Trenneffekt wurde durch Backen einer handelsüblichen Backmischung für Kuchen auf dem mit den Zusammensetzungen beschichteten Aluminiumblech bestimmt. Die Entfernbarkeit des Kuchens nach dem Backvorgang wurde bewertet:
- 0:: keine Haftung des Kuchens
- 1:: leichte Haftung des Kuchens
- 2:: schwere Entfernbarkeit des Kuchens
- 3:: Kuchen bleibt größtenteils auf der Beschichtung haften.

Die Beständigkeit des Trenneffektes wurde durch 100-maliges Wiederholen des Vorganges überprüft.

### Kochwassertest:

Ein mit der Zusammensetzung (20 µm) beschichetes Aluminiumblech wurde für 8 Stunden in einen mit kochendem Wasser gefüllten Behälter getaucht. Die Beschichtung wurde nach Entnahme aus dem kochenden Wasser auf Haftung und Blasenbildung überprüft. Die Haftungsprüfung erfolgte durch Gitterschnitt nach DIN ISO 2409. Die Bewertung erfolgte nach den folgenden Noten:
- 0:: kein Einfluß nach Belastung
- 1:: leichte Blasenbildung und/oder leichter Haftungsverlust
- 2:: deutliche Blasenbildung und/oder starker Haftungsverlust.

### Temperaturbeständigkeit:

Die Temperaturbeständigkeit wurde durch Lagerung bei 220°C über einen Zeitraum von 16 Stunden bestimmt: Überprüft wurde Gilbungsbeständigkeit (Δb im L a b-System), Haftung und Glanzerhaltung. Die Haftungsprüfung erfolgte durch Gitterschnitt nach DIN ISO 2409. Die Bewertung erfolgte nach folgenden Noten:
- 0:: kein Einfluß durch die Temperatur-Belastung
- 1:: leichte Gilbung und/oder leichter Haftungsverlust nach Temperatur-Belastung
- 2:: deutliche Gilbung und/oder starker Haftungsverlust nach Temperatur-Belastung.

### Lagerstabilität:

Bei der Bestimmung der Lagerstabilität nach 4 Wochen bei 40°C wurden Viskositätsstabilität, Trübungen, Separationserscheinungen und die Verarbeitbarkeit beurteilt.

### Haftung:

Die Haftungsprüfung erfolgte durch Gitterschnitt nach DIN ISO 2409.

### Bleistifthärte:

Die Bleistifthärte wurde nach ECCA-Norm T4-ISO 3270-ASTM D 3363 bestimmt.

Die Vorteile der erfindungsgemäßen Beschichtungen werden aus den durchgeführten Tests (Tabelle 2) deutlich.

**Tabelle 2:**

| Eigenschaften der getesteten Beschichtungen: | | | | |
|---|---|---|---|---|
| | Beschichtung 1 | Beschichtung 2 | Beschichtung 3 | Beschichtung 4 |
| Lagerstabilität Flüssiglack (4 Wochen bei 40°C) | i.O. | i.O. | n.i.O. (Separation) | n.i.O. (Separation) |
| Trenneffekt | 0 | 0 | 0 | 0 |
| Trenneffekt nach 100 Cyclen | 0 - 1 | 0 | 2 | 1 |
| Kochwasserbeständigkeit | 0 | 0 | 0 | 3 |
| Bleistifthärte bei Raumtemperatur: bei 200°C: | 5H 4H | 5H 4H | 5H 4H | H 2B |
| Glanz bei 60° (vor / nach 100 Cyclen) | 90 / 88 | 92 / 91 | 92 / 82 | 85 / 72 |
| Temperaturbeständigkeit bei 220°C, 30 Stunden | 0 | 0 | 0 | 0 |
| Haftung zum Untergrund | i.O. | i.O. | i.O. | i.O. |
| (mit (n).i.O. = (nicht) in Ordnung) | | | | |

## Patentansprüche

1. Zusammensetzung zur Herstellung von Beschichtungen mit Trenneffekt enthaltend
(A) 100 Gew.-Teile eines oder mehrerer Polysiloxanharze der allgemeinen Formel
RₐSi(OR')_{b}O_{(4 - a - b)/2}
mit 0<a<2, 0<b<2 und a+b<4,
(B) 0,05 bis 10 Gew.-Teile eines oder mehrerer linearer und/oder verzweigter Polysiloxane der Formel
R''O-[R'''₂Si-O]ₙ-R''
(C) 5 bis 80 Gew.-Teile eines Hydroxylgruppen enthaltenden Polyesters,
wobei
Rₐ, R', R'' und R''' jeweils unabhängig voneinander für einen Alkylrest mit 1 bis 8 C-Atomen oder einen aromatischen Rest mit 6 bis 20 C-Atomen steht und
n für eine Zahl im Bereich von 4 bis 5000 steht.

2. Zusammensetzung nach Anspruch 1, **dadurch gekennzeichnet, daß** die Reste Rₐ, R', R'' und R''' jeweils unabhängig voneinander für einen Rest stehen, der ausgewählt ist aus Methyl, Ethyl, Isopropyl, n-Butyl, t-Butyl und Phenyl.

3. Zusammensetzung nach Anspruch 1, **dadurch gekennzeichnet, daß** der Rest R'' für einen Wasserstoffrest oder eine -Si(CH₃)₃-Gruppe steht.

4. Zusammensetzung nach Anspruch 1, **dadurch gekennzeichnet, daß** der Rest R''' für eine Polysiloxanseitenkette der allgemeinen Formel
-[R'''₂Si-O]ₙ-R''
steht.

5. Zusammensetzung nach Anspruch 1, enthaltend 0,1 bis 5 Gew.-Teile Polysiloxan (B).

6. Zusammensetzung nach Anspruch 1, enthaltend 10 bis 30 Gew.-Teile Polyester (C).

7. Zusammensetzung nach Anspruch 1, enthaltend weiterhin einen Veresterungskatalysator.

8. Zusammensetzung nach Anspruch 1, enthaltend weiterhin Pigmente, Rheologiesteuermittel, Füllstoffe, Lösemittel, Additve, Haftvermittler und/oder Stabilisatoren.

9. Zusammensetzung nach Anspruch 1, erhältlich durch gleichzeitige Umsetzung der Komponenten (A), (B) und (C).

10. Zusammensetzung nach Anspruch 9, **dadurch gekennzeichnet, daß** der Umsetzungsgrad 20 bis 80 %, insbesondere 25 bis 40 % beträgt.

11. Substrate, insbesondere Backbleche, Backformen, Pfannen, Metalltöpfe und dergleichen beschichtet mit einer Zusammensetzung nach einem der Ansprüche 1 bis 9.

12. Substrate nach Anspruch 11, **dadurch gekennzeichnet, daß** der Umsetzungsgrad vollständig ist.

13. Verfahren zur Herstellung einer Zusammensetzung nach einem der Ansprüche 1 bis 10, **dadurch gekennzeichnet, daß** man die Komponenten (A), (B) und (C) in Gegenwart eines Katalysators, insbesondere eines Metallkatalysators umgesetzt werden.

14. Verfahren nach Anspruch 13, **dadurch gekennzeichnet, daß** man einen Organotitankatalysator einsetzt.

15. Verfahren nach Anspruch 13, **dadurch gekennzeichnet, daß** man die Komponenten (A), (B) und (C) in Gegenwart eines oder mehrerer Lösemittel umsetzt.

16. Verfahren nach einem der Ansprüche 13 bis 15, **dadurch gekennzeichnet, daß** man bis zu einem Reaktionsumsatz umsetzt, ab dem die getrocknete Zusammensetzung einen klaren, transparenten Film ergibt.

## Claims

1. Composition for preparing coatings having a release effect, comprising
(A) 100 parts by weight of one or more polysiloxane resins of the general formula
RₐSi(OR')_{b}O_{(4-a-b)/2}
where 0<a<2, 0<b<2 and a+b<4,
(B) from 0.05 to 10 parts by weight of one or more linear and/or branched polysiloxanes of the formula
R''O-[R'''₂Si-O]ₙ-R''
and
(C) from 5 to 80 parts by weight of a hydroxyl-containing polyester,
where
Rₐ, R', R" and R''' each independently of one another are an alkyl radical having 1 to 8 carbon atoms or an aromatic radical having 6 to 20 carbon atoms, and
n is a number in the range from 4 to 5000.

2. Composition according to Claim 1, **characterized in that** the radicals Rₐ, R', R" and R''' each independently of one another are a radical selected from methyl, ethyl, isopropyl, n-butyl, t-butyl and phenyl.

3. Composition according to Claim 1, **characterized in that** the radical R " is a hydrogen radical or a -Si(CH₃)₃ group.

4. Composition according to Claim 1, **characterized in that** the radical R''' is a polysiloxane side chain of the general formula
-[R'''₂Si-O]ₙ-R''.

5. Composition according to Claim 1, containing from 0.1 to 5 parts by weight of polysiloxane (B).

6. Composition according to Claim 1, containing from 10 to 30 parts by weight of polyester (C).

7. Composition according to Claim 1, further comprising an esterification catalyst.

8. Composition according to Claim 1, further comprising pigments, rheology control agents, fillers, solvents, additives, adhesion promoters and/or stabilizers.

9. Composition according to Claim 1, obtainable by simultaneous reaction of components (A), (B) and (C).

10. Composition according to Claim 9, **characterized in that** the degree of conversion is from 20 to 80%, in particular from 25 to 40%.

11. Substrates, especially metal baking sheets, baking tins, pans, metal pots or the like, coated with a composition according to any of Claims 1 to 9.

12. Substrates according to Claim 11, **characterized in that** the conversion is complete.

13. Process for preparing a composition according to any of Claims 1 to 10, **characterized in that** it comprises reacting components (A), (B) and (C) in the presence of a catalyst, in particular a metal catalyst.

14. Process according to Claim 13, **characterized in that** an organotitanium catalyst is used.

15. Process according to Claim 13, **characterized in that** components (A), (B) and (C) are reacted in the presence of one or more solvents.

16. Process according to any of Claims 13 to 15, **characterized in that** reaction is carried out up to a reaction conversion at which the dried composition gives a clear, transparent film.

## Revendications

1. Composition pour la préparation de revêtements avec un effet de séparation, contenant
(A) 100 parties en poids d'une ou de plusieurs résines polysiloxane de formule générale
RₐSi(OR')_{b}O_{(4-a-b)/2}
avec 0<a<2, 0<b<2 et a+b<4,
(B) 0,05 à 10 parties en poids d'un ou de plusieurs polysiloxanes linéaires et/ou ramifiés de formule
R''O-[R'''₂Si-O]ₙ-R''
(C) 5 à 80 parties en poids d'un polyester contenant des groupements hydroxyle
Rₐ, R', R" et R''' représentant à chaque fois, indépendamment l'un de l'autre, un radical alkyle comprenant 1 à 8 atomes de carbone ou un radical aromatique comprenant 6 à 20 atomes de carbone et
n représentant un nombre dans la plage de 4 à 5000.

2. Composition selon la revendication 1, **caractérisée en ce que** les radicaux Rₐ, R', R" et R''' représentent à chaque fois indépendamment l'un de l'autre un radical choisi parmi un méthyle, un éthyle, un isopropyle, un n-butyle, un tert-butyle et un phényle.

3. Composition selon la revendication 1, **caractérisée en ce que** le radical R'' représente un radical hydrogène ou un groupement -Si(CH₃)₃.

4. Composition selon la revendication 1, **caractérisée en ce que** le radical R''' représente une chaîne latérale polysiloxane de formule générale
- [R'''₂Si-O]ₙ-R''.

5. Composition selon la revendication 1, contenant 0,1 à 5 parties en poids de polysiloxane (B).

6. Composition selon la revendication 1, contenant 10 à 30 parties en poids de polyester (C).

7. Composition selon la revendication 1, contenant en outre un catalyseur d'estérification.

8. Composition selon la revendication 1, contenant en outre des pigments, des agents de réglage de la rhéologie, des charges, des solvants, des additifs, des promoteurs d'adhérence et/ou des stabilisants.

9. Composition selon la revendication 1, pouvant être obtenue par transformation simultanée des composants (A), (B) et (C).

10. Composition selon la revendication 9, **caractérisée en ce que** le degré de transformation est de 20 à 80%, en particulier de 25 à 40%.

11. Substrats, en particulier plaques de cuisson, moules de cuisson, poêles, marmites en métal et analogues, revêtus par une composition selon l'une quelconque des revendications 1 à 9.

12. Substrats selon la revendication 11, **caractérisés en ce que** le degré de transformation est complet.

13. Procédé pour la préparation d'une composition selon l'une quelconque des revendications 1 à 10, **caractérisé en ce qu'**on transforme les composants (A), (B) et (C) en présence d'un catalyseur, en particulier d'un catalyseur métallique.

14. Procédé selon la revendication 13, **caractérisé en ce qu'**on utilise un catalyseur de titane organique.

15. Procédé selon la revendication 13, **caractérisé en ce qu'**on transforme les composants (A), (B) et (C) en présence d'un ou de plusieurs solvants.

16. Procédé selon l'une quelconque des revendications 13 à 15, **caractérisé en ce qu'**on transforme jusqu' à un rendement de réaction à partir duquel la composition séchée résulte en un film clair, transparent.
